# NOUVEAU FASCICULE DE BREVET EUROPEEN

(11) **EP 0 678 173 B2**
(45) Date de publication et mention de la décision concernant l'opposition: **03.12.2003**
(45) Mention de la délivrance du brevet: 01.03.2000
(21) Numéro de dépôt: 95900811.1
(22) Date de dépôt: 08.11.1994
(51) Int. Cl.: F16D 13/71

(54) **MODULE D'EMBRAYAGE A COUVERCLE ASSUJETTI AU VOLANT PAR UN MONTAGE DU TYPE MONTAGE A BAIONNETTE**
KUPPLUNGSEINHEIT WOBEI DER KUPPLUNGSDECKEL DURCH EINE BAJONETTVERBINDUNG AUF DAS SCHWUNGRAD MONTIERT IST
CLUTCH MODULE WITH A COVER ATTACHED TO THE FLYWHEEL BY A BAYONET-TYPE MOUNTING MEANS

(30) Priorité: 09.11.1993 FR 9313336
(43) Date de publication de la demande: 25.10.1995
(73) Titulaire: VALEO, 75017 Paris (FR)
(72) Inventeur: SEVENNEC, Yvon, . (FR)
(74) Mandataire: Gamonal, Didier
(86) Numéro de dépôt international: FR9401300
(87) Numéro de publication internationale: WO95013485

(56) Documents cités:
- FR-A- 2 525 934
- GB-A- 2 193 271
- US-A- 3 317 013
- US-A- 4 600 092

## Description

L'invention concerne les modules d'embrayage, notamment pour véhicules automobiles.

Ainsi qu'on le sait, un module d'embrayage comporte, de manière unitaire, un mécanisme, une friction d'embrayage et un volant, le mécanisme comportant lui-même, entre autres, un couvercle par lequel il est rapporté sur le volant.

Usuellement, la fixation du couvercle sur le volant se fait par vissage, rivetage ou sertissage.

Cela nécessite donc, soit de pratiquer des filetages et/ou des perçages sur les pièces à assembler, soit, dans le cas d'un sertissage, d'avoir recours à un outillage complexe.

Pour éviter ces inconvénients on a prévu dans le document GB-A-2 193 271 une disposition dans laquelle des moyens de montage du type montage à baïonnette interviennent entre le couvercle et le volant.

Ces moyens font appel à des ouvertures pratiquées à la périphérie externe du volant et à des pattes en forme de U du couvercle.

Les pattes sont engagées dans les ouvertures puis on effectue une rotation en sorte que lesdites pattes viennent coiffer la périphérie externe du volant.

Il faut donc ménager une gorge au niveau de la couronne de démarrage portée par le volant pour le passage de l'extrémité des pattes du couvercle.

Cette réalisation complique la formation du volant et augmente l'encombrement radial du module.

L'invention a pour objet un module d'embrayage permettant d'éviter ces inconvénients.

Suivant l'invention ce problème est résolu par la partie caractérisante de la revendication 1.

Quoi qu'il en soit, grâce à de tels moyens de montage, l'assemblage du mécanisme et du volant n'implique pour l'essentiel qu'un simple engagement axial du mécanisme sur le volant suivi d'une rotation relative d'une fraction de tour de ce mécanisme par rapport à ce volant comme dans l'art antérieur.

Néanmoins on appréciera que le volant à une forme simple, ses bossages étant obtenus aisément par moulage, et que les lèvres du couvercle sont obtenues aisément par emboutissage.

Il n'est donc pas nécessaire de réaliser un logement au niveau de la couronne de démarrage du volant et le couvercle ne s'étend pas au delà de la périphérie externe du volant en sorte que l'on réduit l'encombrement radial du module.

En outre le couvercle est d'encombrement axial réduit par rapport à celui du document GB-A-2 193 271 précité. La consommation de matière est ainsi réduite.

Préférentiellement, cependant, pour un blocage en rotation du mécanisme sur le volant, il est associé, à l'un au moins des secteurs du couvercle, au moins une patte qui, pliée en conséquence, est en butée circonférentielle contre le bossage correspondant du volant, et il convient donc, après l'assemblage, de procéder au pliage de cette patte.

Quoi qu'il en soit, aucun sertissage ni filetage et/ou perçage n'est avantageusement nécessaire pour cet assemblage, ni aucun rivetage ou soudage.

Cet assemblage ne nécessite donc avantageusement aucun outillage particulier.

Il permet également de diminuer le nombre de pièces à stocker.

En outre, le démontage est possible, en dépliant la ou les pattes assurant le blocage en rotation.

Une réutilisation du couvercle est alors avantageusement possible, cette ou ces pattes pouvant à nouveau être pliées, et donc réutilisées, ce qui n'est pas le cas des rivets une fois que ceux-ci ont été éliminés par perçage pour le démontage d'un assemblage assuré par rivetage.

Les caractéristiques et avantages de l'invention ressortiront d'ailleurs de la description qui va suivre, à litre d'exemple, en référence aux dessins schématiques annexés sur lesquels :
la figure 1 est, avec un arrachement central, une vue partielle en plan d'un module d'embrayage suivant l'invention, suivant la flèche I de la figure 2 ;
la figure 2 en est une vue partielle en coupe axiale, suivant la ligne II-II de la figure 1 ;
la figure 3 en est, avec l'élimination de certains organes, une autre vue partielle en coupe axiale, suivant la ligne III-III de la figure 1 ;
la figure 4 est une vue latérale partielle du seul couvercle du mécanisme mis en oeuvre dans ce module d'embrayage, suivant la flèche IV de la figure 1 ;
la figure 5 est une vue partielle en coupe axiale de ce couvercle, suivant la ligne V-V de la figure 4 la
figure 6 est une vue latérale partielle qui, reprenant pour partie celle de la figure 4, se rapporte à une variante de réalisation de ce couvercle ;
la figure 7 est une vue partielle en coupe axiale de cette variante de réalisation, suivant la ligne VII-VII de la figure 6.

Tel qu'illustré sur ces figures, le module d'embrayage 10 suivant l'invention, qui forme un ensemble unitaire, comporte, successivement axiale ment, de manière connue en soi, un mécanisme il, une friction d'embrayage 12 et un volant 13.

Le mécanisme 11 comporte, lui-même, successivement axialement, un couvercle 14, qui, tel que décrit ultérieurement, est assujetti au volant 13, un diaphragme 15, qui prend appui sur le couvercle 14, et un plateau de pression 16, sur lequel porte le diaphragme 15.

Ici, le mécanisme 11 est de type "poussé".

Le diaphragme 15 prend donc appui sur le couvercle 14 du côté de la périphérie de plus petit diamètre de sa partie périphérique 18 formant rondelle Belleville, cependant qu'il porte sur le plateau de pression 16 du côté de la périphérie de plus grand diamètre de celle-ci.

Sous la sollicitation du diaphragme 15, le plateau de pression 16 est apte à serrer contre le volant 13 les garnitures de frottement 20 du disque de friction 19 que comporte la friction d'embrayage 12.

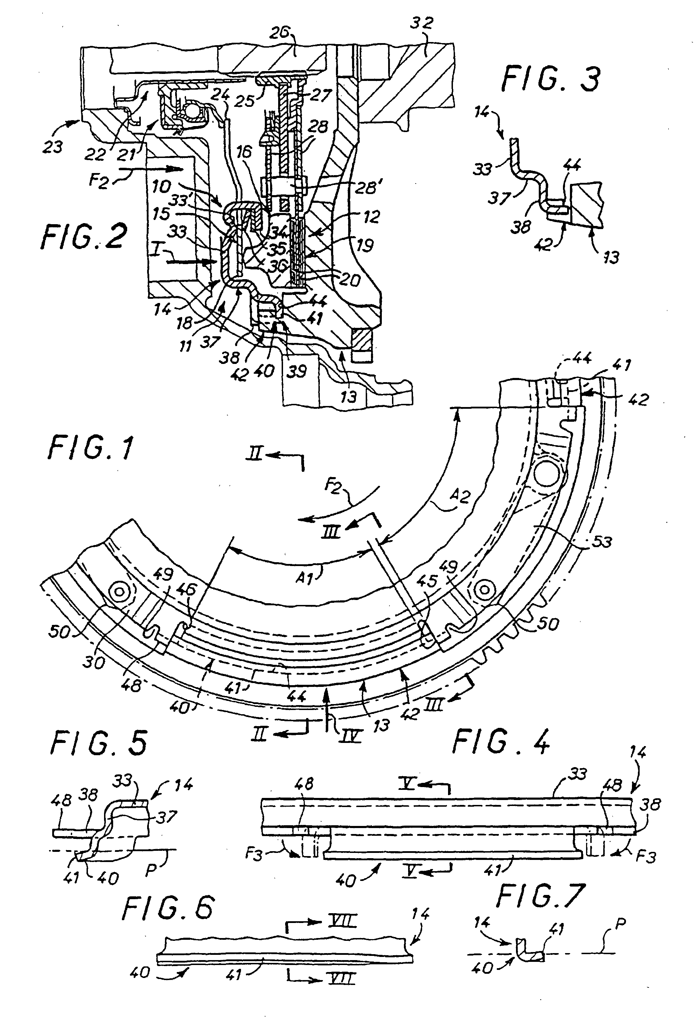

Pour le desserrage de ces garnitures de frottement 20, il est prévu, tel que représenté en traits fins sur la figure 2, une butée de débrayage 21, qui, montée coulissante axialement sur un manchon 22 solidaire du carter 23 de l'ensemble, est apte à agir en poussée sur les doigts 24 que forme la partie centrale du diaphragme 15.

Ici, la friction d'embrayage 12 est à moyeu amortisseur.

Outre un moyeu 25, par lequel elle est adaptée à être calée en rotation sur un arbre mené 26, en l'espèce l'arbre de sortie d'une boîte de vitesses, et un voile de moyeu 27, qui est solidaire, ici par sertissage, du moyeu 25, elle comporte 4 deux rondelles de guidage 28, qui s'étendent chacune respectivement de part et d'autre du voile de moyeu 27, et dont est solidaire le disque de friction 19, avec, interposés circonférentiellement entre le voile de moyeu 27 et ces rondelles de guidage 28, des moyens élastiques à action circonférentielle, non visibles sur les figures, logés pour partie dans des fenêtres du voile de moyeu 27 et pour partie dans des fenêtres des rondelles de guidage 28.

Ici, le disque de friction 19 est accolé à l'une des 10 rondelles de guidage 28 et il est solidarisé à celle-ci par les mêmes colonnettes 28' qui la solidarisent à l'autre des rondelles de guidage 28.

Ici, le volant 13 est d'un seul tenant en étant en matière moulable, ici en fonte.

Mais, en variante, il peut aussi bien s'agir d'un volant "divisé", c'est-à-dire d'un volant en deux parties.

Par des vis de fixation non visibles sur les figures, le volant 13 est apte à être rapporté sur un arbre menant 32, en l'espèce le vilebrequin d'un moteur à combustion interne.

Ce volant 13 porte à sa périphérie externe (figure 2) une couronne de démarrage (non référencée) destinée à être entraînée, de manière connue en soi, par le démarreur du véhicule.

Ici, le couvercle 14 du mécanisme 11 est en tôle 20 emboutie et il comporte, transversalement, un fond 33, qui, s'étendant annulairement, fournit, ici par un cordon 33' formé par emboutissage, un appui primaire à la partie périphérique 18 formant rondelle Belleville du diaphragme 15, d'un premier côté de celle-ci, et dont sont issues des pattes 34 fournissant 25 un appui secondaire à cette partie périphérique 18 de l'autre côté de celle-ci, par l'intermédiaire d'une rondelle entretoise 35 et d'une rondelle élastique 36.

Le diaphragme 15 est ainsi monté de manière pivotante sur le couvercle 14.

Le couvercle 14 comporte, en outre, périphériquement, une paroi latérale 37, par laquelle il contourne le diaphragme 15.

Ici, le couvercle 14 comporte, encore transversalement, un rebord 38, qui s'étend radialement en direction opposée au fond 33, et donc en direction opposée à l'axe de l'ensemble, et par lequel il porte axialement sur le volant 13.

Entre le couvercle 14 et le volant 13 interviennent, pour l'assujettissement de ce couvercle 14 à ce volant 13, des moyens de montage 39 du type montage à baïonnette.

Ces moyens de montage 39 comportent suivant l'invention, d'une part, sur le couvercle 14, au moins deux secteurs 40, qui, allongés circonférentiellement, en étant répartis circulairement autour de l'axe de l'ensemble, présentent chacun, transversalement en saillie, sur une partie au moins de leur longueur, une lèvre d'engagement 41, et, d'autre part, sur le volant 13, un nombre égal de bossages 42, qui, allongés circonférentiellement, en étant écartés l'un de l'autre d'un angle-au-centre A2 au moins égal à celui Al sous-tendu par un secteur 40 du couvercle 14, et, en pratique, légèrement supérieur à celui-ci, présentent chacun transversalement, sur une partie au moins de leur longueur à compter de l'une de leurs extrémités circonférentielles, une gorge 44 avec laquelle est en prise la lèvre d'engagement 41 d'un tel secteur 40.

Ici, le couvercle 14 comporte trois secteurs 40, régulièrement répartis à 120° deux à deux autour de l'axe de l'ensemble, et, conjointement, le volant 13 comporte, en correspondance, trois bossages 42 obtenues aisément par moulage en étant d'orientation axiale.

La somme des angles-au-centre Al, A2 correspondants est sensiblement égale à 120°, tout en étant légèrement inférieure à cette valeur.

Ici suivant une caractéristique de l'invention, la lèvre d'engagement 41 des secteurs 40 du couvercle 14 s'étend radialement en direction opposée à l'axe de l'ensemble, et, conjointement, la gorge 44 des bossages 42 du volant 13 affecte la surface de celui-ci tournée vers cet axe. On appréciera que la lèvre 41 est obtenue aisément par emboutissage et que, suivant une autre caractéristique de l'invention, les bossages 42 s'étendent axialement vers le fond 33 du couvercle 14.

lci, la lèvre d'engagement 41 s'étend sur toute la longueur des secteurs 40, et, de même, la gorge 44 des bossages 42 s'étend de l'une à l'autre de leurs extrémités circonférentielles.

Ici, les secteurs 40 du couvercle 14 sont des bords tombés, qui, formés chacun à la faveur d'une échancrure 45 du rebord 38 de ce couvercle 14, en étant séparés des bords de cette échancrure 45 par des encoches 46 ayant facilité leur découpe et leur pliage, s'étendent globalement axialement.

Conjointement, les bossages 42 du volant 13 font saillie axialement à sa périphérie externe, et ce sont sur ces bossages 42 que prend appui le rebord 38 du couvercle 14.

Ici, la lèvre d'engagement 41 des secteurs 40 du couvercle 14 s'étend au moins localement légèrement en oblique par rapport à un plan P perpendiculaire à l'axe de l'ensemble, et, par exemple, par rapport au plan P passant par sa racine, figure 5.

Par exemple, figures 4, 5, cette lèvre d'engagement 41 s'étend en oblique sur toute sa longueur, en s'écartant du plan P au fur et à mesure qu'elle s'éloigne de l'axe de l'ensemble.

Il en résulte, globalement, qu'une telle lèvre d'engagement 41 présente un léger faux parallélisme par rapport au rebord 38.

En variante, figures 6, 7, la lèvre d'engagement 41 ne s'étend légèrement en oblique par rapport au plan P que sur une partie seulement de sa longueur. Sur le reste de celle-ci, elle s'étend perpendiculairement à l'axe de l'ensemble.

A l'un au moins des secteurs 40 du couvercle 14, il est associé au moins une patte 48 qui, pliée en conséquence, est en butée circonférentielle contre le bossage 42 correspondant du volant 13, pour assurer le blocage en rotation de ce couvercle 14 sur ce volant 13. ici, il y a une patte 48 à chacune des extrémités circonférentielles de chacun des secteurs 40.

Initialement, figures 5, 6, cette patte 48 s'étend radialement dans le prolongement du rebord 38, en direction opposée à l'axe de l'ensemble, en étant comme précédemment séparée de la partie courante de ce rebord 38 par une encoche 49, figure 1.

De manière connue en soi, le plateau de pression 16 est solidaire en rotation du couvercle 14, tout en étant mobile axialement par rapport à celui-ci.

Ici, il est attelé au couvercle 14 par des languettes 50, qui, réparties circulairement autour de l'axe de l'ensemble, en étant disposées transversalement par rapport à celui-ci, s'étendent chacune entre, d'une part, le rebord 38 du couvercle 14, et, d'autre part, une patte 51 faisant saillie radialement à la périphérie du plateau de pression 16.

Pour le logement de ces languettes 50, aussi bien que pour celui des pattes 51 du plateau de pression 16 et des rivets correspondants, le rebord 38 du couvercle 14 présente, localement, au niveau de ces languettes 50, des zones embouties 53 décalées axialement en direction du fond 33 du couvercle 14, ce qui, au montage, évite toute interférence avec les bossages 42 du volant 13.

Au montage, c'est-à-dire lorsque le mécanisme 11 est mis en place, le couvercle 14 est engagé axialement sur le volant 13, suivant la flèche Fl de la figure 2, avec ses secteurs 40 entre les bossages 42 de ce volant 13 ; les pattes 48 sont alors droites.

Le couvercle 14 est ensuite tourné d'une fraction de tour par rapport au volant 13, suivant la flèche F2 de la figure 1, avec engagement de la lèvre d'engagement 41 de ses secteurs 40 dans la gorge 44 des bossages 42 du volant 13.

Compte tenu de l'obliquité au moins locale de cette lèvre d'engagement 41, cet engagement se fait avantageusement avec un léger coincement, ce qui assure par lui-même le maintien du couvercle 14, et donc du mécanisme 11, sur le volant 13.

Au terme de l'assemblage ainsi obtenu, les pattes 48, qui, comme le couvercle 14 auquel elles appartiennent, sont métalliques, sont pliées à l'équerre, tel que schématisé en traits interrompus sur la figure 4, et suivant les flèches F3 de celle-ci, ce qui assure le blocage définitif en rotation du couvercle 14, et donc du mécanisme il, sur le volant 13.

Un démontage reste cependant toujours avantageusement possible.

Il suffit en effet de déplier les pattes 48, et de dégager ensuite l'ensemble suivant un processus inverse du précédent

Bien entendu, la présente invention ne se limite pas à la forme de réalisation décrite et représentée, mais englobe toute variante d'exécution.

En particulier, au lieu de mettre en oeuvre des pattes 34 venues du couvercle 14, les moyens d'assemblage assujettissant de manière pivotante à ce couverde 14 le diaphragme 15 peuvent mettre en oeuvre des colonnettes, comme décrit par exemple dans le document FR-A-1 524 350 (US-A-3,499,512).

En outre, au lieu d'être assurée par des languettes, la liaison en rotation, avec mobilité axiale, du plateau de pression 16 par rapport au couvercle 14, peut être du type à tenons et mortaises, comme décrit dans le document FR-A-2 463 874 (US-A-4,362,230), le plateau de pression 16 présentant alors par exemple, en saillie radiale, des pattes en prise avec des ouvertures pratiquées à cet effet dans la paroi latérale 37 du couvercle 14.

Dans ce cas, le rebord 38 du couvercle 14 n'a pas besoin de présenter des zones embouties 53.

En variante, on peut, dans le même but, diminuer l'angle-au-centre Al sous-tendu par les secteurs 40 du couvercle 14.

On appréciera que le volant 13 vient au plus près du carter 23 (figure 2) et que le couvercle 14 ne s'étend pas radialement entre le carter 23 et le volant 13 ce qui permet de réduire l'encombrement radial du module.

On notera que les bossage 42 s'étendent au-dessus du plateau de passion 16 et que l'on ne modifie pas le volant 3 au niveau de sa couronne de démarrage visible à la figure 2 et non référencée.

## Revendications

1. Module d'embrayage du genre comportant un mécanisme (11), une friction d'embrayage (12), et un volant (13), ledit mécanisme (11) comportant lui-même un couvercle (14) par lequel il est rapporté sur le volant (13), interviennent des moyens de montage (39) du type montage à baïonnette, comportant, d'une part, sur le couvercle (14), au moins deux secteurs (40), qui, allongés circonférentiellement, en étant répartis circulairement, présentent chacun, transversalement en saillie, sur une partie au moins de leur longueur, une lèvre d'engagement (41), et, d'autre part, sur le volant (13), un nombre égal de bossages (42), allongés circonférentiellement, en étant écartés l'un de l'autre d'un angle-au-centre A2) au moins égal à celui (A1) sous-tendu par un secteur (40) du couvercle (14), **caractérisé en ce que** les bossages (42) du volant (13) font saillie axialement à sa périphérie externe en s'étendant vers le fond du couvercle (14) et présentent chacun, sur une partie au moins de leur longueur à compter de l'une de leurs extrémités circonférentielles, une gorge radiale (44) tournée vers l'axe avec laquelle est en prise la lèvre d'engagement (41) d'un tel secteur (40) qui s'étend radialement en direction opposée à l'axe de l'ensemble.

2. Module d'embrayage suivant la revendication 1, **caractérisé en ce que** les bossages (42) s'étendent axialement au-dessus d'un plateau de pression (16) apte à serrer contre le volant (13) des garnitures de frottement (20) du disque de friction (19) que comporte la friction d'embrayage (12).

3. Module d'embrayage suivant la revendication 1 ou 2, **caractérisé en ce qu'**un rebord (38) du couvercle (14) prend appui axialement sur les bossages (42).

4. Module d'embrayage suivant la revendication 1, **caractérisé en ce que**, au moins localement, la lèvre d'engagement (41) d'un secteur (40) du couvercle (14) s'étend légèrement en oblique par rapport à un plan (P) perpendiculaire à l'axe de l'ensemble.

5. Module d'embrayage suivant la revendication 1, **caractérisé en ce que**, à l'un au moins des secteurs (40) du couvercle (14), il est associé au moins une patte (48) qui, pliée en conséquence, est en butée circonférentielle contre le bossage (42) correspondant du volant (13).

6. Module d'embrayage suivant la revendication 1, **caractérisé en ce que** le couvercle (14) comporte trois secteurs (40) et le volant (13) trois bossages (42).

7. Module d'embrayage suivant l'une quelconque des revendications précédentes, **caractérisé en ce que** le couvercle (14) présentant transversalement un rebord (38) pour son appui axial sur le volant (13), les secteurs (40) sont des bords tombés, qui, formés chacun à la faveur d'une échancrure (45) dudit rebord (38), s'étendent globalement axialement.

## Patentansprüche

1. Kupplungsmodul, umfassend einen Mechanismus (11), eine Reibungskupplungsscheibe (12) und ein Schwungrad (13), wobei der besagte Mechanismus (11 ) selbst einen Deckel (14) umfasst, durch den er am Schwungrad (13) angebracht ist, wobei Montagemittel (39) in der Ausführung als Bajonettmontage zum Einsatz kommen, die einerseits, auf dem Deckel (14), wenigstens zwei Sektoren (40) umfassen, die, umfangsmäßig gestreckt und kreisförmig verteilt, jeweils, in Querrichtung vorstehend, wenigstens auf einem Teil ihrer Länge, eine Eingriffslippe (41) aufweisen, und andererseits, auf dem Schwungrad (13), eine gleiche Anzahl von Vorsprüngen (42), die umfangsmäßig gestreckt und um einen Mittelpunktwinkel (A2) wenigstens gleich dem durch einen Sektor (40) des Deckels (14) begrenzten Mittelpunktwinkel (A1) zueinander beabstandet sind, **dadurch gekennzeichnet, dass** die Vorsprünge (42) des Schwungrads (13) an seinem äußeren Umfang axial vorstehen, wobei sie sich zum Boden des Deckels (14) hin erstrecken und jeweils wenigstens auf einem Teil ihrer Länge von einem ihrer Umfangsenden aus, eine zur Achse hin ausgerichtete radiale Auskehlung (44) aufweisen, mit der sich die Eingriffslippe (41) eines solchen Sektors (40) im Eingriff befindet, die sich radial in der zur Achse der Baueinheit entgegengesetzten Richtung erstreckt.

2. Kupplungsmodul nach Anspruch 1,**dadurch gekennzeichnet, dass** die Vorsprünge (42) sich außerhalb einer Druckplatte (16) axial erstrecken, die geeignet ist, die Reibbeläge (20) der Reibungsscheibe (19), welche die Reibungskupplungsscheibe (12) aufweist, gegen das Schwungrad (13) anzudrücken.

3. Kupplungsmodul nach Anspruch 1 oder 2, **dadurch gekennzeichnet, dass** eine Randleiste (38) des Deckels (14) axial auf den Vorsprüngen (42) zur Auflage kommt.

4. Kupplungsmodul nach Anspruch 1,**dadurch gekennzeichnet, dass** sich die Eingriffslippe (41) eines Sektors (40) des Deckels (14) wenigstens örtlich leicht schräg im Verhältnis zu einer zur Achse der Baueinheit senkrechten Ebene (P) erstreckt.

5. Kupplungsmodul nach Anspruch 1,**dadurch gekennzeichnet, dass** mit wenigstens einem der Sektoren (40) des Deckels (14) wenigstens ein Ansatz (48) verbunden ist, der, dementsprechend gebogen, an dem entsprechenden Vorsprung (42) des Schwungrads (13) umfangsmäßig zum Anschlag kommt.

6. Kupplungsmodul nach Anspruch 1,**dadurch gekenn-zeichnet, dass** der Deckel (14) drei Sektoren (40) und das Schwungrad (13) drei Vorsprünge (42) umfasst.

7. Kupplungsmodul nach einem der vorangehenden Ansprüche, **dadurch gekennzeichnet, dass**, während der Deckel (14) in Querrichtung eine Randleiste (38) für seine axiale Auflage auf dem Schwungrad (13) aufweist, die Sektoren (40) Bördel sind, die jeweils mittels einer Aussparung (45) der besagten Randleiste (38) gebildet sind und sich insgesamt axial erstrecken.

## Claims

1. A clutch module, of the kind comprising a mechanism (11), a clutch friction disc (12), and a flywheel (13), the said mechanism (11) itself comprising a cover plate (14) whereby it is mounted on the flywheel (13), with interposed bayonet type mounting means (39) comprising, firstly on the cover plate (14), at least two sectors (40) which are elongate circumferentially and spaced apart on a circle, and each of which has an engagement lip (41) projecting transversely over at least part of their length, and, secondly on the flywheel (13), an equal number of bosses (42) which are elongate circumferentially and spaced from each other by an angle (A2) at the centre which is at least equal to that (A1) which is subtended by a sector (40) of the cover plate (14), **characterised in that** the bosses (42) of the flywheel (13) proj ect axially at its outer periphery, extending towards the base of the cover plate (14), with each said boss having, over at least part of its length considered from one of its circumferential ends, a radial groove (44) directed towards the axis, with which the engagement.lip (41) of a said sector (40), extending radially away from the axis of the assembly, is in engagement.

2. A clutch module according to Claim 1, **characterised in that** the bosses (42) lie axially above a pressure plate (16) which is adapted to clamp against the flywheel (13) friction liners (20) of the friction disc (19) which is part of the clutch friction wheel (12).

3. A clutch module according to Claim 1 or Claim 2, **characterised in that** a flange (38) of the cover plate (14) bears axially on the bosses (42).

4. A clutch module according to Claim 1, **characterised in that**, at least locally, the engagement lip (41) of a sector (40) of the cover plate (14) extends slightly obliquely with respect to a plane (P) perpendicular to the axis of the assembly.

5. A clutch module according to Claim 1, **characterised in that** there is associated with at least one of the sectors (40) of the cover plate (14) at least one lug (48) which, being bent in consequence, is in circumferential abutment against the corresponding boss (42) of the flywheel (13).

6. A clutch module according to Claim 1, **characterised in that** the cover plate (14) has three sectors (40) and the flywheel (13) has three bosses (42) .

7. A clutch module according to any one of the preceding Claims, **characterised in that**, the cover plate (14) having a transverse flange (38) for its axial engagement on the flywheel (13), the sectors (40) are upset edges which, each being formed in a notch (45) of the said f lange (38), extend generally axially.
